# EUROPEAN PATENT SPECIFICATION

(11) **EP 4 603 272 B1**
(45) Date of publication and mention of the grant of the patent: **25.11.2026**
(21) Application number: 25152714.9
(22) Date of filing: 20.01.2025
(51) Int. Cl.: B32B 1/08, B32B 25/08, B32B 25/16, B32B 27/34, F16L 11/04

(54) **LOW HYDROGEN PERMEATING FLEXIBLE BARRIER HOSE FOR ANODE WET LINE IN FUEL CELL SYSTEM**
WASSERSTOFFARMER, FLEXIBLER SPERRSCHLAUCH FÜR ANODENNASSLEITUNG IN EINEM BRENNSTOFFZELLENSYSTEM
TUYAU FLEXIBLE FORMANT BARRIÈRE PERMÉABLE À FAIBLE TENEUR EN HYDROGÈNE POUR LIGNE HUMIDE D'ANODE DANS UN SYSTÈME DE PILE À COMBUSTIBLE

(30) Priority: 15.02.2024 US 202418442798
(43) Date of publication of application: 20.08.2025
(73) Proprietor: ContiTech Techno-Chemie GmbH, 61184 Karben (DE)
(72) Inventor: Haines, Bradley James, Fairlawn, 44333 (US); Stumpf, Kai, 34346 Hann. Münden (DE)
(74) Representative: Bird & Bird LLP - Hamburg

(56) References cited:
- WO-A1-2023/116988
- CN-A- 1 972 963
- US-A1- 2015 075 666
- US-B1- 6 251 977

## Description

### TECHNICAL FIELD

The field to which the disclosure generally relates is a hose suitable for use in a fuel cell system such as for vehicles, more particularly an anode wet line hose for hydrogen fuel cells, and in particular to such a hose that provides flexibility and sufficiently low permeability to hydrogen flowing through the hose.

### BACKGROUND

A fuel cell is an electrochemical energy conversion device that converts hydrogen and oxygen into electricity, heat, and water. The electricity generated by the fuel cell can be used to power the motor, lights, and other electrical systems in a vehicle.

A typical fuel cell system includes a source of hydrogen, a source of oxygen, and a fuel cell stack that performs the electrochemical reaction. One example of a fuel cell stack is a proton exchange membrane fuel cell (PEM or PEMFC). The four elements of the PEM fuel cell are the anode, the cathode, the electrolyte acting as the proton exchange membrane which conducts positively charged ions and blocks electrons, and the catalyst that facilitates the reaction of oxygen and hydrogen.

The water content in the PEM affects the proton conductivity and activation potentials. If the PEM is not adequately humidified, the protonic conductivity decreases, meaning the cell resistance increases. As such, PEM fuel cells may utilize wet line hoses to convey the fuel, such as the hydrogen gas, along with water vapor to help control the moisture level of the PEM. The PEM fuel cell operates at a fairly low temperature, and in a vehicle, such wet line hoses transporting either the hydrogen or oxygen gases can operate at temperature ranges of -40° to 95° C, and an operating pressure of about 600 kPa.

### SUMMARY

Due to space constraints, such as in vehicles, conventional wet line hoses should be sufficiently flexible to permit routings through confined spaces. As such, conventional wet line hoses are usually formed from an all-rubber construction to permit such flexibility. A problem with such all-rubber hoses, however, is that they exhibit unacceptable permeation losses by highly permeable gases such as hydrogen.

Polyamide (nylon) barrier layers offer a solution to reduce the permeation losses of hydrogen gas. A problem with polyamide barrier layers, however, is that they offer poor bonding to flexible elastomeric materials that form other layers of the hose. This often requires the use of an adhesive layer to bond the elastomeric layer to the plastic polyamide barrier layer. However, such adhesive used to bond the polyamide layer to the elastomeric layer can result in result in the release of volatile organic compounds which can become trapped as bubbles between layers and/or which can be applied inconsistently, each of which can result in spotty adhesion between layers. US 2015/075666 relates to a hose comprising a rubber backing layer directly bonded to a continuous polyamide layer without an intervening adhesive layer, wherein the hose exhibits increased low and high temperature capability and decreased permeation compared to standard automotive refrigerant hoses. CN 1972963 discloses maleinized imide polymer resins, the polymer being selected from the group consisting of butadiene homopolymer, butadiene copolymers, isoprene homopolymer, isoprene copolymers, and poly(maleic anhydride-co-alkenyl benzenes), which are used to treat fabric and thereby improve fabric to rubber adhesion. US 6251977 discloses an elastomer composition for curing by organic peroxides, the composition comprising an EPDM, a filler such as carbon black, and an additive such as zinc methacrylate, together with an elastomer grafted with maleic anhydride that reacts with the zinc methacrylate to reinforce the curing of the elastomer.

At least one aspect of the present disclosure solves one or more problems associated with conventional fuel cell wet line hose. In particular, according to at least one aspect, the present disclosure provides a flexible hose suitable for use in a fuel cell wet line having one or more elastomeric layers directly bonded to a polyamide barrier layer of the hose.

According to an aspect, a multilayer hose suitable for use as a fuel cell wet line hose includes: an elastomeric layer directly bonded to a polyamide (PA) barrier layer without an intervening adhesive layer, the elastomeric layer formed from a composition including: ethylene propylene diene monomer (EPDM); a peroxide cure system; a diacrylate crosslinking co-agent; and a maleic anhydride functionalized polybutadiene crosslinking co-agent.

The EPDM elastomeric layer provides flexibility and elasticity, as well as enhanced chemical resistance and permeation resistance to the water vapor in the fuel cell wet line.

The PA barrier layer provides enhanced permeation resistance to the hydrogen gas to reduce hydrogen fuel losses in the fuel cell wet line, thereby improving fuel cell performance.

The peroxide cure system can reduce or eliminate the use of sulfur curative that could potentially react with hydrogen gas in the fuel cell wet line, and which could otherwise cause degradation of the fuel cell system components.

The crosslinking co-agents combined with the peroxide cure system provides exceptional bonding performance of the elastomeric EPDM layer to the PA barrier layer, thereby eliminating the need for an intervening adhesive layer which otherwise could cause issues with the hose performance. More particularly, the use of the diacrylate crosslinking co-agent combined with the maleic anhydride functionalized polybutadiene crosslinking co-agent provides a dual bonding mechanism for direct bonding the PA barrier layer to the EPDM elastomeric layer.

The bonding performance of the EPDM elastomeric layer to the PA barrier layer may be characterized in that the strength of the bond is greater than the strength of the elastomeric layer itself.

The permeation resistance of the multilayer hose may be characterized by a gas permeation coefficient of about 1x10-⁸ cc /cm² sec. cmHg or less for a dry hydrogen gas at 90°C, as measured in accordance with JIS K7126, for example.

As the inner tube of a fuel cell wet line, it also may be beneficial for the exemplary elastomeric composition to have a low extractable content to avoid contamination of fuel cell components. Thus, the composition may have a relatively low plasticizer oil content, which can be compensated for with a non-maleated polybutadiene resin system, in particular a liquid polybutadiene resin, for enhancing processability and/or material performance of the material in view of the low oil amount.

According to another aspect, a method of producing such a multilayer hose includes: extruding the elastomeric layer; extruding the PA barrier layer; wherein the elastomeric layer and the PA barrier layer are in direct contact without an intervening adhesive layer; activating the peroxide cure system by increasing temperature; crosslinking the elastomeric layer and directly bonding the elastomeric layer to the PA barrier layer.

According to another aspect, a flexible fuel cell wet line hose is provided that has an elastomeric layer directly bonded to a polyamide (PA) barrier layer, in which the hose satisfies requirements of EC 79/2009 standard.

According to another aspect, a fuel cell system includes a source of hydrogen gas; a fuel cell stack including an anode; and a multilayer hose according to any of the foregoing fluidly connecting the source of hydrogen gas to the anode.

According to another aspect, a method of using such a multilayer hose in a fuel cell system includes conveying hydrogen gas dispersed in water vapor to the anode of the fuel cell.

The following description and the annexed drawings set forth certain illustrative embodiments according to the present disclosure. These embodiments are indicative, however, of but a few of the various ways in which the principles of the invention may be employed. Other objects, advantages and novel features according to aspects of the present disclosure will become apparent from the following detailed description when considered in conjunction with the drawings.

### BRIEF DESCRIPTION OF THE DRAWINGS

The annexed drawings, which are not necessarily to scale, show various embodiments according to the present disclosure.
Fig. 1 is a schematic illustration of a fuel cell system including one or more wet line hose(s) according to an embodiment of the present disclosure;
Fig. 2 illustrates a barrier layer type reinforced hose in a cut away perspective view, in accordance with an embodiment of the present disclosure;
Fig. 3 illustrates another barrier layer type reinforced hose in a cut away perspective view, in accordance with an embodiment of the present disclosure.

### DETAILED DESCRIPTION

The principles and aspects according to the present disclosure have particular application to wet line hoses for fuel cells, in particular an anode wet line hose for conveying hydrogen and water vapor, and thus will be described herein mainly in this context. It is understood, however, that the principles and aspects of the present disclosure may be applicable to other types of hose for other applications, or to other articles in general, when desirable to provide one or more advantages of the material(s) and/or construction(s) described herein.

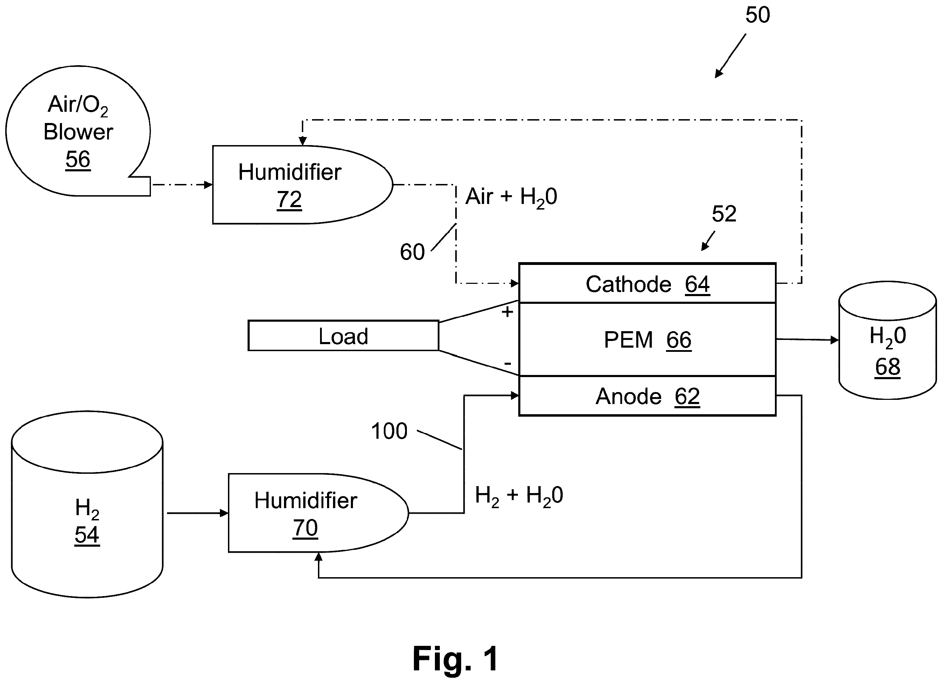

Referring initially to Fig. 1, a schematic view of a fuel cell system 50 is shown. The fuel cell system 50 includes a fuel cell stack 52, a source of hydrogen gas 54, such as a hydrogen tank or hydrogen gas generator, and a source of oxygen gas 56, such as a blower for transferring air, or a tank containing oxygen or air. Suitable hoses 100, 60 fluidly connect the hydrogen source 54 and the oxygen source 56 to respective parts of the fuel cell stack 52. The fuel cell stack includes an anode 62, a cathode 64, and a proton exchange membrane (PEM) 66 in the form of a polymer electrolyte membrane with a catalyst layer on both the anode side and the cathode side for promoting the electrochemical reaction.

Hydrogen gas is conveyed from the hydrogen gas source 54 via the hose 100 and enters the fuel cell stack 52 on the anode side 62 and is forced hrough the catalyst where it is split into two H+ ions (protons) and two electrons. The PEM 66 allows only the positively charged ions to pass through it to the cathode 64. The electrons are conducted to an external circuit (doing work such as turning the motor) and return to the cathode side 64 of the fuel cell. Oxygen gas is conveyed from the oxygen gas source 56 via hose 60 and enters the fuel cell on the cathode side 64 of the fuel cell. At the cathode 64, the negative hydrogen electrons (having already produced electricity) reunite with the positively charged hydrogen ions, where they combine via a catalyst on the cathode 64 with the oxygen to form a water molecule, which is expelled from the system such as to a water tank 68.

Because the water content in the PEM 66 affects the proton conductivity and activation potentials, the hose(s) 100, 60 in the fuel cell system 50 are configured as wet line hoses. As shown, a humidifier 70 is interposed between the hydrogen source 54 and the anode 62 to inject water vapor with the hydrogen gas stream in the hose 100 to moisten the anode side. Likewise, a humidifier 72 may be interposed between the oxygen source 56 and the cathode 64 to inject water vapor with the air/O2 gas stream in the hose 60 to moisten the cathode side. As shown, these wet line hoses 100, 60 may be part of a looping wet line in which excess gas can be returned via a return section of each line to the humidifier 70, 72 (or other device) for dewatering and/or re-humidifying the recycled gas.

The PEM fuel cell operates at a fairly low temperature, and in a vehicle, such wet line hoses 100, 60 transporting either the hydrogen or oxygen gases can operate at temperature ranges of -40° to 95° C, and an operating pressure in a range from greater than 0 psi to about 150 psi, with capability for withstanding a pressure up to about 500 psi, for example. The hoses 100, 60 in the fuel cell system 50 may be of the same or similar construction, or the hoses 100, 60 may be different. Likewise, the return line segments may be the same type of hose as their respective upstream supply segments 100, 60, or these return segments may be different from their upstream segments.

To provide a suitable hose for use in the operating conditions of a wet line of a fuel cell system, an aspect of the present disclosure provides a multilayer hose including an elastomeric layer directly bonded to a polyamide (PA) barrier layer without an intervening adhesive layer, in which the elastomeric layer is formed from a composition including ethylene propylene diene monomer (EPDM); a peroxide cure system; a diacrylate crosslinking co-agent; and a maleic anhydride functionalized polybutadiene crosslinking co-agent, whereby the co-agents upon vulcanization of the elastomeric composition by the peroxide cure system provides improved direct bonding of the elastomeric layer to the PA barrier layer. Such a multilayer hose will be described in further detail below, with exemplary reference to the drawings.

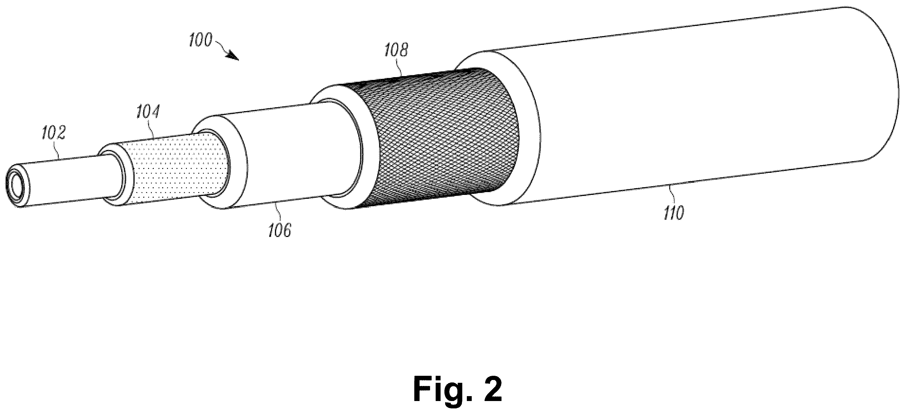

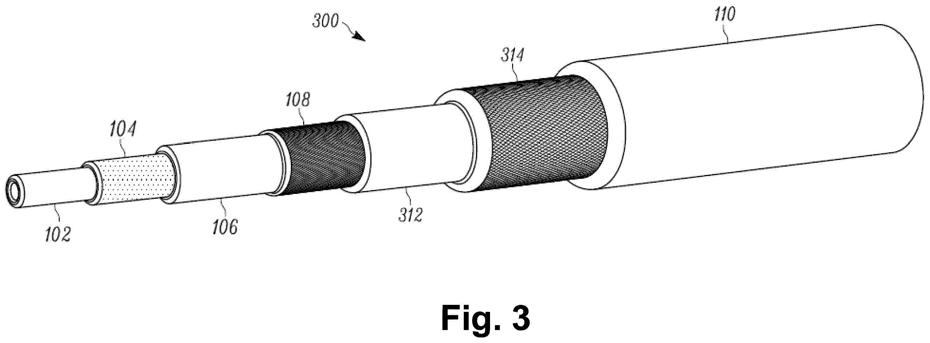

Turning to Figs. 2 and 3, exemplary embodiments of the fuel cell wet line hose 100 are shown, in which like reference numerals are used to denote like elements. It should be understood that the accompanying figures illustrate the various implementations described herein and are not meant to limit the scope of various technologies described herein. In addition, it is understood that various aspects and features of these embodiments may be substituted for one another or used in conjunction with one another where applicable. Furthermore, it is understood that the description of material(s) forming the various parts of one embodiment article may be the same material(s) for the same or similar part in another embodiment article, except as otherwise noted below.

Fig. 2 illustrates a barrier-type reinforced anode wet line hose 100 in a cut-away perspective view. The hose 100 includes an inner tube 102 forming an inner fluid passage, or lumen, through which the hydrogen gas and water vapor are conveyed. A permeation inhibiting barrier layer 104 is disposed outwardly of the inner tube 102 and is configured to reduce permeation of the hydrogen gas. Disposed outwardly and adjacent to the permeation inhibiting barrier layer 104 is a tie layer 106. A reinforcing layer 108 is disposed outwardly from the tie layer 106. A cover layer 110 is disposed outwardly from the reinforcing layer 108 and is the outermost layer of the illustrated hose 100.

The barrier layer 104 is configured to reduce permeation of the hydrogen gas to reduce hydrogen fuel losses in the fuel cell wet line, thereby improving fuel cell performance. To enhance such performance, the barrier layer 104 is formed from a polyamide (PA) material that provides suitable permeation resistance of hydrogen gas and which improves upon conventional all-rubber hose constructions. For example, the PA material may have a construction in the hose 100 that provides a gas permeation coefficient of about 1x10-8 cc /cm2 sec. cmHg or less for a dry hydrogen gas at 90°C, as measured in accordance with JIS K7126, for example. This can be accomplished without a metallic layer employed in the hose 100, which otherwise could react with the hydrogen gas.

The PA material of the barrier layer 104 may be any suitable PA material that provides the desired permeation resistance among other properties making it suitable for the construction of the hose 100. For example, the barrier layer 104 (also referred to as the PA barrier layer for simplicity), may be formed from a composition including: PA 6 (nylon 6), PA 6,6 (nylon 6,6), PA 11 (nylon 11), PA 12 (nylon 12), PA 66 (nylon 66), or combinations thereof. In exemplary embodiments, the PA barrier layer 104 is formed from a composition comprising PA 66/6, which is a mixture of PA 66 and PA6 in which a majority of the copolymer is the PA 66 component. Such a material may combine the properties of mechanical strength, chemical resistance, permeation resistance, or the like, making it particularly suitable as the barrier layer 104 for the anode wet line hose 100.

The PA composition of the barrier layer 104 may include additives combined with the base PA polymer. Such additives may include reinforcing agents, plasticizers, stabilizers, flame retardants, processing aids, or the like. The particular composition of the PA barrier layer 104 is not limited and would be understood by those skilled in the art for achieving the properties desired for the particular application.

To provide adequate permeation resistance while also maintaining suitable flexibility of the hose 100, the barrier layer 104 may have a wall thickness in a range from about 0.002 inch (0.05 mm) to about 0.01 inch (0.254 mm) thick. For instance, in many cases the permeation inhibiting layer will be from 0.003 inch (0.0762 mm) to 0.005 inch (0.127 mm) thick.

The inner tube 102 of the hose 100 is formed from an elastomeric composition which provides flexibility and elasticity. The elastomeric composition forming the inner tube 102 of the hose also provides low extractables, chemical resistance, and enhanced permeation resistance to the water vapor in the fuel cell wet line.

The inner tube 104 may have any suitable wall thickness to provide the properties desired for the application. In exemplary embodiments, the inner tube wall thickness may be from about 0.03 in. (0.71 mm) to about 0.04 in (1.0 mm).

As noted above, the elastomeric composition forming an elastomeric layer of the hose, such as the inner tube layer 104, includes ethylene propylene diene monomer (EPDM), a peroxide cure system, a diacrylate crosslinking co-agent, and a maleic anhydride functionalized polybutadiene crosslinking co-agent. The elastomeric composition may include one or more additional polymers, and various additives, each of which may be of any suitable type and in any suitable amount to form the desired hose. Such additives are compounded relative to the total polymer content of the composition, and as such may be represented in parts per hundred (phr), which means parts per 100 parts of the base polymer/elastomer/rubber.

The various additives in the elastomeric composition may be functional or inert. For example, the one or more additives may include: fillers or reinforcement agents (e.g., carbon blacks, silicas, calcium carbonates (chalk), kaolin (clays), aluminum silicates, calcium silicates, magnesium silicates (talc), or other minerals, or mixtures thereof); plasticizers, softeners, chain extending oils (e.g., mineral oils, paraffinic oils, naphthenic oils, polymer plasticizers, ester plasticizers, phthalate plasticizers, vegetable oils, epoxidized oils, or the like, or mixtures thereof); accelerators, activators (e.g., thiazoles, carbamates, sulfides, sulfenamides, stearic acids, metal oxides such as zinc oxide, etc., or mixtures thereof); retardants (e.g., carboxylates, resorcinol, etc., or mixtures thereof); antioxidants, antiozonants, stabilizers (e.g., phenolics, amines, phosphites, waxes, zinc oxide, etc., or mixtures thereof); flame retardants (e.g., antimony trioxide, aluminum hydroxide, magnesium hydroxide, organophosphorus compounds, halogenated compounds, intumescent materials such as intercalated graphite, etc., or mixtures thereof); anti-static agents (e.g., conductive fillers such as conductive carbon black, graphite, metallic powders, carbon nanotubes, graphene, etc., or mixtures thereof); pigments, dispersants, dyes and other colorants, or opacifying agents; various processing aids, flow modifiers, emulsifiers, thickeners, foaming or anti-foaming agents, wetting agents or surfactants; and/or any other suitable additive that may be added separately or in any suitable combination with the foregoing. It is of course understood that one or more of these additives may have multiple functions. The formulation of the material may be compounded in a conventional mixing apparatus as an admixture of the rubber and additive components, and may be processed into the article (e.g., belt) according to conventional techniques.

In exemplary embodiments, in addition to the EPDM, the diacrylate crosslinking co-agent, and the maleic anhydride functionalized polybutadiene crosslinking co-agent, the elastomeric composition forming the inner tube layer 102 may further include reinforcing filler(s), plasticizer(s), polymer resin(s) to improve processability and/or material properties, antioxidant(s), and activator(s). In some embodiments, the elastomeric composition forming the inner tube layer 102 may be devoid of phenylenedimaleimide, polyamide, resorcinol, hexa methoxy methyl melamine (HMMM), and/or the like.

The EPDM component of the elastomeric composition may be include one or more different types of EPDM rubber that form the matrix and serve as the base of the composition. Other types of rubber other than EPDM may be present in lesser amounts to the EPDM rubber(s), or the EPDM rubber(s) may constitute the only type of rubber forming the base polymer of the composition. As such, in exemplary embodiments, the EPDM rubber(s) are present in the composition in a total amount from about 80 phr to about 100 phr, more particularly about 90 to about 100 phr, or even more particularly from about 95 to about 100 phr.

In certain embodiments, the EPDM component includes at least two different types of EPDM rubber, including a first EPDM rubber having a lower viscosity than the second EPDM rubber. The lower viscosity EPDM rubber may be present in the composition in a total amount from about 40 to about 80 phr, more particularly from about 50 to about 70 phr, such as about 40, 50, 60, 70 or 80 phr. The second EPDM rubber with a higher viscosity than the first EPDM rubber may be present in the composition in a total amount from about 20 phr to about 60 phr, more particularly from about 30 to about 50 phr, such as about 20, 30, 40, 50 or 60 phr. The lower viscosity EPDM polymer may be present in a greater amount than the second relatively higher viscosity EPDM polymer, such as a ratio of about 60:40, so as to reduce viscosity of the mixture to facilitate extrusion.

The one or more reinforcing agents or reinforcing fillers in the elastomeric composition may enhance specific characteristics, such as improve the mechanical properties of the elastomeric composition. The reinforcing filler(s) in the elastomeric composition may be of any suitable type or combination of types and may be in any suitable amount(s) as may be desired for the application.

In exemplary embodiments, the elastomeric composition contains one or more carbon black(s) as the reinforcing agents. The carbon black(s) present in the elastomeric compound may have any suitable size and may be derived from any suitable source. The total content of the one or more carbon black(s) may be in a range from about 20 phr to about 60 phr; more particularly from about 30 phr to about 50 phr.

In exemplary embodiments, the elastomeric composition includes at least two different types of carbon black, including a relatively finer type of carbon black and a type of carbon black that is coarser than the finer carbon black. Generally, finer carbon blacks provide greater reinforcement and increased tensile strength, increased modulus (stiffness), and increased hardness of the elastomeric composition. Accordingly, the type(s) of the carbon black(s) utilized may affect the amount(s) to achieve the desired properties for the application.

Typically, carbon blacks use a naming convention as specified by ASTM D1765 to identify the particular type and size of the carbon black. For N-series carbon blacks, grades range from N110 to N990, in which the first numerical digit designates a mean particle diameter of the carbon black, and the last two numerical digits designate the structural complexity of the carbon black. A lower first digit (e.g., N100-series) has a smaller particle size, and thus higher surface area, than a higher first digit (e.g., N900-series). Unlike virgin carbon black, recovered carbon black (rCB) does not use the same N-number designation system according to ASTM D1765; however, the rCB still may have at least an equivalent mean particle size as N-series designated virgin carbon black, and thus any designation of an N-type carbon black as used herein encompasses both virgin and other types of equivalent carbon black (e.g., rCB) unless specifically stated otherwise.

The finer carbon black in the elastomeric composition may have a size in a range from about N300-series carbon black up to about N500-series carbon black (e.g., nitrogen surface area of about 70 m2/g to 40 m2/g). In exemplary embodiments, the finer carbon black may be an N330 carbon black. The finer carbon black (e.g., N330) may be present in the elastomeric composition in a total amount from about 5 phr to about 40 phr, more particularly from about 10 phr to about 30 phr, such as about 10, 20, 30, or 40 phr.

The relatively coarser carbon black in the elastomeric composition may have a size in a range from about an N500-series carbon black up to about an N700-series carbon black (e.g., nitrogen surface area of about 40 m2/g to about 3 m2/g). In exemplary embodiments, the coarser carbon black may be an N550 carbon black. The coarser carbon black (e.g., N550) may be present in the elastomeric composition in a total amount from about 5 phr to about 40 phr, more particularly from about 10 phr to about 30 phr, such as about 10, 20, 25, 30, or 40 phr. The coarser carbon black may be present in the composition in a greater amount than the finer carbon black.

The plasticizer oil(s) in the elastomeric composition may increase flexibility, reduce hardness, and improve the processing characteristics of the elastomeric composition. The plasticizer oil(s) may be of any suitable type or combination of types and may be in any suitable amount(s) as may be desired for the application. For example, the plasticizer may include an aromatic oil, a paraffinic oil, a naphthenic oil, or a bio (e.g., plant-derived) oil.

In exemplary embodiments, the plasticizer oil(s) (e.g., naphthenic oil) may be present in the elastomeric composition in a total amount from about 1 phr to about 15 phr, more particularly about 2 phr to about 10 phr, such as about 1,3,5, 7, 10, or 15 phr. If too much total plasticizer is used in the elastomeric composition, such as greater than the above-identified range(s), then the elastomeric composition may exhibit excessive softening making it difficult to process, may cause dimensional instability, and may have reduced strength, potentially making it unsuitable for the application. Moreover, the plasticizer oil(s) may be an extractable component of the composition, and thus in a fuel cell wet line hose it may be advantageous to limit the amount of plasticizer oil(s). As such, in certain embodiments, the elastomeric composition does not contain more than about 15 phr of plasticizer oil(s), more particularly not more than 10 phr, and even more particlualry not more than 5 phr of plasticizer oil(s).

To compensate for a relatively low oil content and/or to provide improved material properties for the elastomeric composition, the composition may further include another polymer material, in particular a liquid resin, which may be a polybutadiene (PBD) polymer resin, for example, such as a non-maleated PBD. The PBD resin may improve properties such as flexibility, low-temperature performance, compression set resistance, and/or dynamic properties. The PBD resin in liquid form also may serve as a processing aid to compensate for a low plasticizer oil content. In exemplary embodiments, the PBD resin which may be in liquid form may be present in the elastomeric composition in a total amount from about 1 phr to about 15 phr, more particularly about 2 phr to about 10 phr, such as about 1,3,5, 7, 10, or 15 phr. The PBD resin may be a linear, low molecular weight, polybutadiene polymer, terminated with secondary hydroxyl groups, and having a suitable vinyl content. The PBD resin may have a relatively high vinyl content, such as greater than 50%, more particularly about 60% to 70% vinyl content by weight of the polymer.

The relatively low plasticizer oil content compensated for with the non-maleated PBD resin in the above-identified ranges may exhibit a suitable extractable level as measured by ion elution. In such a test, samples of the material are placed in deionized water and heated in an oven at 80°C for four weeks, with conductivity measurements of the water being taken every week after the samples have cooled to room temperature. After storing samples for four weeks at 80°C in deionized water, the extraction content should be such that the conductivity of the water is below 15 µS/cm, more particularly below 10 µS/cm.

The elastomeric composition may include one or more antioxidants and/or antiozonants of any suitable type and any suitable amount. The one or more antioxidants are added to prevent oxidation and degradation of the rubber over time, which can lead to cracking and loss of elasticity. Antiozonants protect rubber from the damaging effects of ozone, which can cause cracking and deterioration. The antioxidant(s) and/or antiozonant(s) may be present in the elastomeric composition in total in a range from about 0.5 phr to about 10 phr, more particularly from about 1 phr to about 5 phr, such as about 1, 2, 3, 4 5, or 10 phr.

The elastomeric composition further may include one or more activators/accelerators that help activate/accelerate the curing system and promote the formation of crosslinks between polymer chains during vulcanization. Any suitable activator(s) or combination of activator(s)/accelerator(s) in any suitable quantity may be utilized in the elastomeric composition. For example, the one or more activators/accelerators may include zinc compounds, such as zinc oxide, zinc 2-Mercaptotoluimidazole, or the like. The total amount of the activator(s)/accelerator(s) present in the elastomeric composition may be in a range from about 1 phr to about 15 phr, more particularly from about 5 phr to about 10 phr.

The peroxide cure system may be any suitable peroxide cure system that crosslinks the EPDM elastomeric composition and promotes bonding of the EPDM elastomeric layer to the PA barrier layer. Such a peroxide cure system may be an organic peroxide, including but not limited to dicumyl peroxide, bis-(t-butyl peroxy-diisopropyl, bis-(t-butyl peroxy-diisopropyl benzene, t-butyl perbenzoate, di-t-butyl peroxide, 2,5-dimethyl-2,5-di-t-butylperoxyhexane, alpha -alpha -bis(t-butylperoxy) diisopropylbenzene, or the like. In exemplary embodiments, the organic peroxide cure system is alpha-bis(t-butylperoxy)diisopropyl. In certain embodiments, the peroxide cure system (e.g., alpha-bis(t-butylperoxy)diisopropyl) is present in the composition in an amount from about 1 phr to about 10 phr, more particularly from about 1 phr to about 5 phr.

The crosslinking co-agents, including the maleic anhydride functionalized polybutadiene crosslinking co-agent and the diacrylate crosslinking co-agent, operate together with the peroxide cure system to promote an improved direct bonding mechanism to the PA barrier layer 104 upon vulcanization. In particular, such a dual co-agent approach provides at least a dual bonding mechanism for direct bonding the PA barrier layer to the EPDM elastomeric layer without the need for an intervening adhesive layer. In addition, this bonding can be accomplished with the PA barrier layer 104 as a separate and distinct layer from the EPDM inner tube layer 102 (e.g., not co-extruded), and without polyamide additives being introduced in the elastomeric composition of the inner tube layer 102.

The maleic anhydride functionalized polybutadiene crosslinking co-agent (MA-PBD) may be of any suitable type and may be provided in any suitable amount in the elastomeric composition to promote bonding to the PA barrier layer. In exemplary embodiments, the MA-PBD co-agent is a low molecular weight, high vinyl content butadiene functionalized with maleic anhydride groups. During vulcanization of the elastomeric composition, the maleic anhydride groups can react with the amine groups on the PA barrier layer surface to form a strong covalent bond. The vinyl content of the MA-PBD co-agent may be greater than about 60%, such as about 70%. The MA-PBD co-agent may be provided in liquid form. In certain embodiments, the elastomeric composition includes the MA-PBD co-agent in a total amount from about 1 phr to about 20 phr, more particularly from about 5 phr to about 15 phr, even more particularly from about 10 phrto 15 phr, such as about 1, 5, 10,15, or 20 phr.

The diacrylate crosslinking co-agent also may be of any suitable type and may be provided in any suitable amount in the elastomeric composition to promote bonding to the PA barrier layer. During vulcanization of the elastomeric composition, the acrylate functional groups of the co-agent can react with the amine groups on the PA barrier layer surface to form a strong covalent bond. In exemplary embodiments, the diacrylate co-agent may be a metallic diacrylate, such as a difunctional metallic diacrylate of a metal-centered monomer with two functional acrylate groups. It is possible that such a metallic diacrylate may form an ionic-type bond with material(s) of the PA barrier layer that could permit different bonding functionality than the MA-PBD co-agent described above. Alternatively or additionally, the improved bonding performance may achieved by the dual bonding agents providing bonding to both the amine group and the carboxylic acid group of the PA material. In exemplary embodiments, the elastomeric composition includes the diacrylate co-agent (e.g., metallic diacrylate) in a total amount from about 1 phr to about 15 phr, more particularly from about 2 phr to about 10 phr, such as about 1,2, 3, 4, 5, 10, or 15 phr.

The synergist effect of the peroxide cure, maleic anhydride functionalized polybutadiene crosslinking co-agent, and diacrylate crosslinking co-agent within the above-identified ranges provides the enhanced dual-bonding mechanism to the PA layer. As such, in exemplary embodiments, a phr ratio of the diacrylate (DA) to MA-PBD (PBD) (DA:PBD) may be in a range from about 5:10 to about 10:5, even more particularly wherein the amount of MA-PBD is greater than the diacrylate. The ratio of total peroxide to the total combined co-agent content (total MA-PBD plus total diacrylate content) may be in a range from about 1:3 to 3:1.

The unique combination of the peroxide cure system, the maleic anhydride functionalized polybutadiene crosslinking co-agent and the diacrylate crosslinking co-agent in the above-identified amounts can provide an enhanced bonding of the EPDM elastomeric inner tube layer 102 to the PA barrier layer 104. For example, such bonding with the materials in the above-identified ranges may exhibit a bond strength than is greater than a strength of the elastomeric composition - i.e., the failure point of the bond is through the elastomeric material instead of at the bond interface.

In view of the foregoing, in exemplary embodiments, the elastomeric composition of the inner tube layer 102 includes: one or more EPDM(s) in a total amount from about 80 phr to about 100 phr, more particularly about 90 to about 100 phr; one or more carbon black(s) in a total amount from about 10 phr to about 80 phr, more particularly from about 20 phr to about 60 phr; one or more plasticizer oil(s) in a total amount from about 1 phr to about 15 phr, more particularly from about 2 phr to about 10 phr; one or more non-maleated polybutadiene resin(s), in particular liquid PBD resin(s), in a total amount from about in a total amount from about 1 phr to about 15 phr, more particularly from about 2 phr to about 10 phr; one or more peroxide(s) in a total amount from about 1 phr to about 10 phr, more particularly from about 1 phr to about 5 phr; one or more maleic anhydride functionalized polybutadiene crosslinking co-agent(s) in a total amount from about 1 phr to about 20 phr, more particularly from about 5 phr to about 15 phr; and one or more diacrylate crosslinking co-agent(s), in particular metallic diacrylate(s), in a total amount from about 1 phr to about 15 phr, more particularly from about 2 phr to about 10 phr. Further additives may include one or more anti-oxidant(s) in a total amount from about 1 phr to about 10 phr, more particularly from about 1 phr to about 5 phr; and/or one or more activator(s) in a total amount from about 1 phr to about 15 phr, more particularly from about 5 phr to about 10 phr. To provide further advantages in bonding performance and/or low extractable performance, the exemplary composition may have ratios of materials as described above.

Referring again to Fig. 2, the tie layer 106 is disposed adjacently and in direct contact with the opposite side of the PA barrier layer 104, and may be direct bonded to the PA barrier layer 104 in the same manner as the inner tube layer 102 described above. In addition, the tie layer 106 is adjacent to the reinforcement layer 108 and may provide adhesion to the fabric reinforcement to "tie" the reinforcement to the inner layers. To provide such direct bonding to the PA barrier layer 104, the tie layer 106 may be formed from the same or similar elastomeric composition as the inner tube layer 102. If different but similar, the elastomeric composition of the tie layer 106 may at least include the same or similar components within the above-noted ranges for the elastomeric composition for the inner tube layer 102. In some embodiments, the layer 106 may not provide bonding or tying to the reinforcement layer 108, and as such may instead be referred to as an intermediate layer 106. The layer 106 may have any suitable wall thickness in a range from about 0.014 in (0.35mm) to about 0.020 in (0.46 mm), for example.

The reinforcement layer 108 provides additional strength to the hose, typically by applying strands of reinforcement around the tie layer 106. The strands may have any suitable configuration or combination of configurations, and the strands may be made of any suitable material or combination of materials for reinforcing the hose.

For example, the reinforcement material of the strands may include, but is not limited to, metal, synthetic or natural material. For example, the reinforcement strands may be metal wire (such as steel wire, stainless-steel wire, plated-steel wire, plain steel wire, or the like). Synthetic materials may include nylon, vinylon, aramid, rayon, polyester (such as polyethylene terephthalate or polyethylene naphthalate), polyvinyl acetate, polyvinyl alcohol (PVA), poly p-phenylene-2,6-benzobisoxazole (PBO), polypropylene, polyamide, carbon fiber, or the like. Natural, ceramic, mineral, etc. fibers may include cotton, jute, hemp, basalt, glass, or the like.

The reinforcement strands may include elongated fibers, filaments, threads, wires, or the like, which may be in monofilament or multi-filament form. The individual strands may be grouped together to form bundles, tows, yarns, cords, or the like. Generally, a tow is a bundle of untwisted individual strands, a yarn is a bundle of twisted or cabled individual strands, and a cord is a twisted, braided, or cabled yam or bundle of yarns. The individual strands or grouping of strands may be arranged in a spiral, braided, knitted, fabric, or wrapped reinforcement construction. In some embodiments, the hose may include one or more of these layers of reinforcement, and each layer may have a different orientation of strand arrangement. For example, where two or more layers of spiral reinforcement may be used, a first layer may be spiral wound in a first winding direction, and a second layer spiral wound in a second winding direction opposite the first winding direction. A braided configuration may include groupings of strands arranged in a 1-over, 1-under braid pattern, a 3-over, 3-under braid pattern, or a 4-over, 4-under braid pattern, or the like.

For the performance characteristics of an anode wet line hose 100, the reinforcement layer 108 may have an arrangement of polyethylene terephthalate strands with a strand grouping size of about 15 to 25 mm, which is arranged in a braided configuration, more particularly a 1-over, 1-under or 2-over, 2-under braid pattern. To provide bonding of the reinforcement layer 108 to the tie layer 106, the strands may treated with a surface coating. An overall thickness of the reinforcement layer 108 may be in a range from about 0.03 in (0.76 mm) to 0.04 in (1.1 mm).

The cover layer 110 is located outwardly of the reinforcement layer 108 and serves to protect the inner layers from the environment of the hose when deployed for use in the field. The cover layer 110 may have any suitable configuration and be made of any suitable material. Several factors may be used to determine the construction and/or materials selection for the cover layer, including but not limited to abrasion resistance, chemical resistance, economy, formability, aesthetics, or the like.

The cover layer 110 material may include, but is not limited to, natural rubber (NR), epoxidized natural rubber (ENR), polybutadiene rubber (BR), acrylonitrile butadiene rubber (NBR), carboxylated nitrile rubber (XNBR), (partially) hydrogenated nitrile rubber (HNBR), styrene butadiene rubber (SBR) , carboxylated styrene-butadiene rubber (XSBR), styrene/ethylene-butylene/styrene-based (SEBS), ethylene propylene monomer (EPM), ethylene propylene diene monomer (EPDM), chloroprene rubber (CR), isoprene rubber (IR), butyl rubber (HR), bromobutyl rubber (BUR), chlorobutyl rubber (CIIR), chlorinated polyethylene (CPE), chlorosulfonated polyethylene (CSM), alkylated chlorosulfonated polyethylene (ACSM), polyepichlorohydrin rubbers (CO; ECO; ETER), ethylenevinyl acetate rubber (EVA), acrylate rubber (ACM), ethylene-acrylate rubber (AEM), silicone rubber (MQ, VMQ,PVMQ, FVMQ), fluorine rubber (FKM), fluorinated methylsilicone rubber (MFQ), perfluorinated propylene rubber (FFPM), perfluorocarbon rubber (FFKM), thermoplastic elastomers (TPE), thermoplastic vulcanizates (TPV), thermoplastic polyurethanes (TPU), polyolefin elastomers (POE), polyvinylchloride (PVC), and/or polyurethane (PU), and/or the like, or blends thereof.

The cover layer compound may further include various additives of suitable types and amounts, such as those described above for elastomeric layer, which may include, but is not limited to, pigments and/or dyes to provide a color, retardants, antioxidants, vulcanizing agents, cure accelerators or other processing aids, reinforcing agents and fillers, such as carbon black, silica, other mineral fillers (e.g., calcium carbonate, talc, etc.), or the like. As an example, reinforcing fillers may be provided in a broad range from about 20 phr to about 700 phr, including for example carbon black from about 200 phr to about 400 phr; and plasticizers such as oils may be provided in a range from about 10 phr to about 200 phr.

For the performance characteristics of an anode wet line hose 100, the composition of the cover layer 110 may be based on a butyl rubber which provides good processing and handling. An overall thickness of the cover layer 110 may be in a range from about 0.05 in (1.3 mm) to about 0.080 in (2.0 mm).

The thickness of the differing layers of the hose 100 may be linked to the desired characteristics, as excessively thin wall thicknesses or excessively thick wall thicknesses present flexibility or kinking problems or coupling compatibility problems of the final hose composite. For every thousandths of a centimeter increase in the thickness of the hose, the flexibility of the hose decreases. Generally, the flexibility may be such that the hose has a bend radius of about 1.5 to 5 times the outer diameter of the hose. To provide sufficient flexibility for routing in confined spaces, such as in a vehicle, to provide sufficient strength at operating pressures, and to provide sufficient permeation resistant to gases such as hydrogen, in exemplary embodiments, the hose 100 may have an overall total wall thickness of about 0.150 in. to about 0.180 in., for example.

An exemplary method of forming the hose 100, may include at least the following steps: a method of producing such a multilayer hose includes: extruding the elastomeric layer; extruding the PA barrier layer; wherein the elastomeric layer and the PA barrier layer are in direct contact without an intervening adhesive layer; activating the peroxide cure system by increasing temperature; crosslinking the elastomeric layer and directly bonding the elastomeric layer to the PA barrier layer.

More specifically, a manufacturing process may include: mixing together the ingredients of the elastomeric composition; extruding the elastomeric composition to form an inner tube layer 102; extruding the PA barrier layer 104 directly onto the inner tube layer 102 without an intervening adhesive layer; extruding the tie layer 106 directly onto the PA barrier layer 104 without an intervening adhesive layer; applying the reinforcement layer 108; extruding the cover layer to overly the reinforcement layer 108; activating the peroxide cure system in the inner tube layer 102 and the tie layer 106 by increasing temperature; crosslinking the elastomeric composition of the inner tube layer 102 and tie layer 106; and directly bonding the inner tube layer 102 and tie layer 106 to the PA barrier layer 104.

Fig. 3 shows another barrier-type reinforced hose suitable for use as an anode wet line hose. The hose 300 is substantially similar to the above-referenced hose 100, and like numerals are used to denote like elements, including the materials forming those elements. As shown, hose 300 includes an inner tube layer 102 (EPDM elastomeric layer) which is surrounded by a permeation inhibiting barrier layer 104 (PA barrier layer), and disposed adjacent barrier layer 104 is tie layer 106 (EPDM elastomeric layer). A reinforcement layer 108 (e.g., braided PET) is disposed outwardly from the tie layer 106. In this embodiment, an additional tie layer 312 is disposed over the reinforcement layer 108, and second reinforcement layer 314 is disposed over the additional tie layer 312. The cover layer 110 is disposed over the second reinforcement layer and is the outermost layer of hose 300.

It is understood that although the illustrated embodiments show a barrier layer type hose, the anode wet line hose conceivably could also be a veneer type hose in which the PA barrier layer forms the inner tubular passage and an elastomeric EPDM layer akin to layer 102 or 106 are directly bonded to this PA veneer without an intermediate adhesive layer. Such a hose may still have the reinforcement layer and cover disposed outwardly from the elastomeric layer.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure.

Any background information contained in this disclosure is to facilitate a better understanding of the various aspects described herein. It should be understood that any such background statements are to be read in this light, and not as admissions of prior art. Likewise, the description and examples are presented herein solely for the purpose of illustrating the various embodiments of the disclosure and should not be construed as a limitation to the scope and applicability of the disclosure.

The phrase "and/or" as used in this disclosure should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

The word "or" as used in this disclosure should be understood as being inclusive and not exclusive. For example, when separating items in a list, "or" or "and/or" shall be interpreted as being inclusive, i.e., the inclusion of at least one, but also including more than one, of a number or list of elements, and, optionally, additional unlisted items. For example, a condition A or B is satisfied by anyone of the following: A is true (or present) and B is false (or not present), A is false (or not present) and B is true (or present), and both A and B are true (or present). Only terms clearly indicating exclusivity should be interpreted as indicating exclusive alternatives (i.e. "one or the other but not both"), such as "either," "only one of," or "exactly one of." In other words, such terms of exclusivity refer to the inclusion of exactly one element of a number or list of elements.

Any references to "one embodiment" or "an embodiment" as used herein is understood to mean that a particular element, feature, structure, or characteristic described in connection with the embodiment is included in at least one embodiment. The appearances of the phrase "in one embodiment" in various places in the specification are not necessarily referring to the same embodiment.

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The word "exemplary" is used herein to mean "serving as an example or illustration." Any aspect or design described herein as "exemplary" is not necessarily to be construed as preferred or advantageous over other aspects or designs. Likewise, the phrases "particularly," "preferably," or the like as used in this disclosure may refer to an element or value that provides advantage(s) in some embodiment(s), however is not intended to limit the scope of the disclosure to those "particular" or "preferable" features.

Transitional language such as "including," "comprising," "having," "containing," "involving," or variations thereof, is intended to be broad and encompass the subject matter listed thereafter, equivalents, and additional subject matter not recited, i.e., to be open-ended and meaning including but not limited to.

It is to be understood that terms such as "top," "bottom," "upper," "lower," "left," "right," "front," "rear," "forward," "rearward," or the like may refer to an arbitrary frame of reference, rather than to the ordinary gravitational frame of reference.

It is to be understood that all values, ranges, ratios or the like as described in this disclosure may be combined in any manner. In addition, it is to be understood that a concentration or amount or value range listed in this disclosure is intended to include any and every concentration or amount or value within the range, including the end points, as if each value within the range has been expressly stated. For example, "a range of from 1 to 10" is to be read as indicating each and every possible number along the continuum between about 1 and about 10. Thus, even if specific data points within the range, or even no data points within the range, are explicitly identified or refer to only a few specific data points, it is to be understood that the inventor(s) appreciate and understand that any and all data points within the range are to be considered to have been specified, and that inventor(s) had possession of the entire range and all points within the range.

In addition, each numerical value used in this disclosure should be read once as modified by the term "about" (unless already expressly so modified), and then read again as not so modified unless otherwise indicated in context. The term "about" as used herein refers to any value which lies within the range defined by a variation of up to ±10% of the stated value, for example, ±10%, ± 9%, ± 8%, ± 7%, ± 6%, ± 5%, ± 4%, ± 3%, ± 2%, ±1%, ±0.01%, or ±0.0% of the stated value, as well as values intervening such stated values. When the term "about" is used in describing a value or an end-point of a range, the disclosure should be understood to include the specific value or end-point referred to.

The term "consisting essentially of" in relation to a composition is to indicate that substantially (e.g., greater than 95 weight % or greater than 99 weight %) of the component(s) present in the composition is the component(s) recited. Therefore, this term does not exclude the presence of minor additives or impurities as would be understood by those having ordinary skill in the art.

Although the invention has been shown and described with respect to a certain embodiment or embodiments, it is apparent that equivalent alterations and modifications will occur to those having ordinary skill in the art upon the reading and understanding this disclosure, and such modifications are intended to be included within the scope of this disclosure as defined in the claims. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the disclosure.

### List of Reference Numerals (part of the description)

- 50: Fuel Cell System
- 52: Fuel cell stack
- 54: Hydrogen Source
- 56: Air/Oxygen Source
- 60: Cathode wet line hose
- 62: Anode
- 64: Cathode
- 66: Proton exchange membrane
- 68: Water tank
- 70: Humidifier
- 72: Humidifier
- 100: Anode wet line, barrier layer reinforced hose
- 300: Anode wet line, barrier layer reinforced hose
- 102: Inner tube layer
- 104: Permeation inhibiting barrier layer
- 106: Tie layer
- 108: Reinforcing layer
- 110: Cover layer
- 312: Second tie layer
- 314: Second reinforcing layer

## Claims

1. A multilayer hose (100, 300) suitable for use as a fuel cell wet line hose comprising:
an elastomeric layer (102, 106) directly bonded to a polyamide (PA) barrier layer (104) without an intervening adhesive layer,
the elastomeric layer (102, 106) formed from a composition comprising:
one or more ethylene propylene diene monomer(s) (EPDM);
a peroxide cure system;
one or more diacrylate crosslinking co-agent(s); and
one or more maleic anhydride functionalized polybutadiene crosslinking co-agent(s).

2. The hose according to claim 1, wherein:
the peroxide cure system includes one or more organic peroxide(s) in a total amount from 1 phr to 10 phr, more particularly from 1 phr to 5 phr.

3. The hose according to any preceding claim, wherein:
the one or more maleic anhydride functionalized polybutadiene crosslinking co-agent(s) are present in a total amount from 1 phr to 20 phr, more particularly from 5 phr to 15 phr.

4. The hose according to any preceding claim, wherein:
the one or more diacrylate crosslinking co-agent(s), in particular metallic diacrylate(s), are present in a total amount from 1 phr to 15 phr, more particularly from 2 phr to 10 phr.

5. The hose according to any preceding claim, wherein:
the total amount of the one or more maleic anhydride functionalized polybutadiene crosslinking co-agent(s) is greater than the total amount of the one or more diacrylate crosslinking co-agent(s),
more particularly, a ratio of the total diacrylate co-agent(s) to the total maleic anhydride functionalized polybutadiene crosslinking co-agent(s) is in a range from 1:20 to 15:20, more particularly 5:10 to 10:10.

6. The hose according to any preceding claim, wherein:
the total amount of the one or more maleic anhydride functionalized polybutadiene crosslinking co-agent(s) is greater than the total amount of the peroxide cure system,
more particularly, a ratio of total peroxide to the total combined co-agent content including the total diacrylate co-agent(s) to the total maleic anhydride functionalized polybutadiene crosslinking co-agent(s) is in a range from about 1:30 to about 10:30, more particularly about 5:15 to about 10:15.

7. The hose according to any preceding claim, wherein:
the diacrylate crosslinking co-agent(s) and the maleic anhydride functionalized polybutadiene crosslinking co-agent(s) serve as bonding agents to the PA barrier layer and improve bonding as compared to a same composition without these bonding agents; more particularly, wherein the bonding performance is such that the interfacial bond between the PA barrier layer and the elastomeric layer is greater than a strength of the elastomeric layer; more particularly, such bonding performance provided with the elastomeric composition itself being devoid of polyamide.

8. The hose according to any preceding claim, wherein:
the elastomeric composition further comprises one or more non-maleated polybutadiene resin(s), in particular liquid polybutadiene resin(s), in a total amount from about in a total amount from 1 phr to 15 phr, more particularly from 2 phr to 10 phr.

9. The hose according to any preceding claim, wherein:
the elastomeric composition further comprises one or more carbon black(s) in a total amount from 10 phr to 80 phr, more particularly from 20 phr to 60 phr.

10. The hose according to any preceding claim, wherein:
the one or more EPDM(s) are present in a total amount from 80 phr to 100 phr, more particularly 90 phr to 100 phr.

11. The hose according to any preceding claim, wherein:
the elastomeric composition is free from phenylenedimaleimide and/or polyamide.

12. The hose according to any preceding claim, wherein:
the PA barrier layer includes PA 6, PA 66, or a combination thereof, in particular the PA barrier layer includes PA 66/6 in which the PA66 is in greater proportion to the PA 6.

13. The hose according to any preceding claim, wherein:
the permeation rate of the hose is suitable for use as a fuel cell wet line,
in particular the fuel cell wet line of a vehicle, more particularly the hose having a bend radius of about 1.5 to 5 times the outer diameter of the hose.

14. The hose according to any preceding claim,
further comprising:
a reinforcement layer (108) disposed outwardly of the elastomeric layer (102, 106); and
a cover layer (110) disposed outwardly of the reinforcement layer;
more particularly, wherein:
the elastomeric layer forms an inner tube (102) of the hose;
the PA barrier layer (104) is disposed outwardly of the inner tube (102);
a tie layer (106) is disposed outwardly of the PA barrier layer (104), the tie layer being directly bonded to the PA barrier layer without an intervening adhesive layer, in particular wherein the tie layer is formed from a composition comprising: one or more ethylene propylene diene monomer(s) (EPDM); a peroxide cure system; one or more diacrylate crosslinking co-agent(s); and one or more maleic anhydride functionalized polybutadiene crosslinking co-agent(s);
the reinforcement layer (108) is disposed outwardly of the tie layer (106); and
the cover layer (110) is disposed outwardly of the reinforcement layer (108).

15. A fuel cell system (50) comprising:
a source of hydrogen gas (54);
a fuel cell stack (52); and
the hose (100, 300) according to any preceding claim fluidly connecting the source of hydrogen gas (54) to the fuel cell stack (52);
more particularly, the fuel cell system comprising a source of water vapor (70) interposed between the source of hydrogen gas (54) and the fuel cell stack (52) such that the hose (100, 300) transports a mixture of water vapor and hydrogen gas.

## Patentansprüche

1. Mehrschichtiger Schlauch (100, 300), der zur Verwendung als Brennstoffzellen-Nassleitungsschlauch geeignet ist, umfassend:
eine Elastomerschicht (102, 106), die ohne dazwischenliegende Klebstoffschicht direkt mit einer Polyamid (PA)-Sperrschicht (104) verbunden ist,
wobei die Elastomerschicht (102, 106) aus einer Zusammensetzung gebildet ist, die umfasst:
ein oder mehrere Ethylen-Propylen-Dien-Monomer(e) (EPDM);
ein Peroxid-Härtungssystem;
ein oder mehrere Diacrylat-Vernetzungshilfsmittel; und
ein oder mehrere mit Maleinsäureanhydrid funktionalisierte Polybutadien-Vernetzungshilfsmittel.

2. Schlauch nach Anspruch 1, wobei:
das Peroxid-Härtungssystem ein oder mehrere organische(s) Peroxid(e) in einer Gesamtmenge von 1 phr bis 10 phr, insbesondere von 1 phr bis 5 phr, enthält.

3. Schlauch nach einem der vorhergehenden Ansprüche, wobei:
das eine oder die mehreren mit Maleinsäureanhydrid funktionalisierten Polybutadien-Vernetzungshilfsmittel in einer Gesamtmenge von 1 phr bis 20 phr, insbesondere von 5 phr bis 15 phr, vorliegen.

4. Schlauch nach einem der vorhergehenden Ansprüche, wobei:
das eine oder die mehreren Diacrylat-Vernetzungshilfsmittel, insbesondere Metall-Diacrylat(e), in einer Gesamtmenge von 1 phr bis 15 phr, insbesondere von 2 phr bis 10 phr, vorliegen.

5. Schlauch nach einem der vorhergehenden Ansprüche, wobei:
die Gesamtmenge des einen oder der mehreren mit Maleinsäureanhydrid funktionalisierten Polybutadien-Vernetzungshilfsmittel größer ist als die Gesamtmenge des einen oder der mehreren Diacrylat-Vernetzungshilfsmittel,
insbesondere ein Verhältnis der gesamten Diacrylat-Hilfsmittel zu den gesamten mit Maleinsäureanhydrid funktionalisierten Polybutadien-Vernetzungshilfsmitteln in einem Bereich von 1 : 20 bis 15 : 20, insbesondere 5 : 10 bis 10 : 10, liegt.

6. Schlauch nach einem der vorhergehenden Ansprüche, wobei:
die Gesamtmenge des einen oder der mehreren mit Maleinsäureanhydrid funktionalisierten Polybutadien-Vernetzungshilfsmittel größer ist als die Gesamtmenge des Peroxid-Härtungssystems,
insbesondere ein Verhältnis des gesamten Peroxids zum gesamten kombinierten Hilfsmittelgehalt, einschließlich der gesamten Diacrylat-Hilfsmittel zu den gesamten mit Maleinsäureanhydrid funktionalisierten Polybutadien-Vernetzungshilfsmitteln, in einem Bereich von etwa 1 : 30 bis etwa 10 : 30, insbesondere etwa 5 : 15 bis etwa 10 : 15, liegt.

7. Schlauch nach einem der vorhergehenden Ansprüche, wobei:
die Diacrylat-Vernetzungshilfsmittel und die mit Maleinsäureanhydrid funktionalisierten Polybutadien-Vernetzungshilfsmittel als Haftvermittler zur PA-Sperrschicht dienen und die Bindung im Vergleich zu einer gleichen Zusammensetzung ohne diese Haftvermittler verbessern; wobei insbesondere die Bindungsleistung derart ist, dass die Grenzflächenbindung zwischen der PA-Sperrschicht und der Elastomerschicht größer als eine Festigkeit der Elastomerschicht ist; wobei insbesondere eine solche Bindungsleistung dadurch erzielt wird, dass die Elastomerzusammensetzung selbst frei von Polyamid ist.

8. Schlauch nach einem der vorhergehenden Ansprüche, wobei:
die Elastomerzusammensetzung ferner ein oder mehrere nicht-maleinierte Polybutadienharz(e), insbesondere flüssige(s) Polybutadienharz(e), in einer Gesamtmenge von etwa 1 phr bis 15 phr, insbesondere von 2 phr bis 10 phr, umfasst.

9. Schlauch nach einem der vorhergehenden Ansprüche, wobei:
die Elastomerzusammensetzung ferner ein oder mehrere Ruß(e) in einer Gesamtmenge von 10 phr bis 80 phr, insbesondere von 20 phr bis 60 phr, umfasst.

10. Schlauch nach einem der vorhergehenden Ansprüche, wobei:
das eine oder die mehreren EPDM(s) in einer Gesamtmenge von 80 phr bis 100 phr, insbesondere 90 phr bis 100 phr, vorliegen.

11. Schlauch nach einem der vorhergehenden Ansprüche, wobei:
die Elastomerzusammensetzung frei von Phenylendimaleimid und/oder Polyamid ist.

12. Schlauch nach einem der vorhergehenden Ansprüche, wobei:
die PA-Sperrschicht PA 6, PA 66 oder eine Kombination davon enthält, insbesondere die PA-Sperrschicht PA 66/6 enthält, worin das PA 66 in einem größeren Anteil als das PA 6 vorliegt.

13. Schlauch nach einem der vorhergehenden Ansprüche, wobei:
die Permeationsrate des Schlauchs für die Verwendung als Brennstoffzellen-Nassleitung geeignet ist,
insbesondere für die Brennstoffzellen-Nassleitung eines Fahrzeugs, wobei insbesondere der Schlauch einen Biegeradius von etwa dem 1,5- bis 5-Fachen des Außendurchmessers des Schlauchs aufweist.

14. Schlauch nach einem der vorhergehenden Ansprüche,
ferner umfassend:
eine Verstärkungsschicht (108), die außerhalb der Elastomerschicht (102, 106) angeordnet ist; und
eine Deckschicht (110), die außerhalb der Verstärkungsschicht angeordnet ist;
wobei insbesondere:
die Elastomerschicht ein Innenrohr (102) des Schlauchs bildet;
die PA-Sperrschicht (104) außerhalb des Innenrohrs (102) angeordnet ist;
eine Zwischenschicht (106) außerhalb der PA-Sperrschicht (104) angeordnet ist, wobei die Zwischenschicht direkt an die PA-Sperrschicht ohne eine dazwischenliegende Klebstoffschicht gebunden ist, insbesondere wobei die Zwischenschicht aus einer Zusammensetzung gebildet ist, die umfasst: ein oder mehrere Ethylen-Propylen-Dien-Monomer(e) (EPDM); ein Peroxid-Härtungssystem; ein oder mehrere Diacrylat-Vernetzungshilfsmittel; und ein oder mehrere mit Maleinsäureanhydrid funktionalisierte Polybutadien-Vernetzungshilfsmittel;
die Verstärkungsschicht (108) außerhalb der Zwischenschicht (106) angeordnet ist; und
die Deckschicht (110) außerhalb der Verstärkungsschicht (108) angeordnet ist.

15. Brennstoffzellensystem (50), umfassend:
eine Quelle für Wasserstoffgas (54);
einen Brennstoffzellenstapel (52); und
den Schlauch (100, 300) nach einem der vorhergehenden Ansprüche, der die Quelle für Wasserstoffgas (54) mit dem Brennstoffzellenstapel (52) fluidtechnisch verbindet;
wobei insbesondere das Brennstoffzellensystem eine Quelle für Wasserdampf (70) umfasst, die zwischen der Quelle für Wasserstoffgas (54) und dem Brennstoffzellenstapel (52) derart angeordnet ist, dass der Schlauch (100, 300) ein Gemisch aus Wasserdampf und Wasserstoffgas transportiert.

## Revendications

1. Tuyau multicouche (100, 300) approprié pour être utilisé comme tuyau pour ligne humide de pile à combustible comprenant :
une couche élastomère (102, 106) directement liée à une couche barrière (104) en polyamide (PA) sans couche adhésive intermédiaire,
la couche élastomère (102, 106) formée à partir d'une composition comprenant :
un ou plusieurs monomères d'éthylène-propylène-diène (EPDM) ;
un système de durcissement au peroxyde ;
un ou plusieurs co-agents de réticulation de diacrylate ; et
un ou plusieurs co-agents de réticulation de polybutadiène fonctionnalisés à l'anhydride maléique.

2. Tuyau selon la revendication 1, dans lequel :
le système de durcissement au peroxyde comprend un ou plusieurs peroxydes organiques en une quantité totale de 1 phr à 10 phr, plus particulièrement de 1 phr à 5 phr.

3. Tuyau selon une quelconque revendication précédente, dans lequel :
un ou plusieurs co-agents de réticulation de polybutadiène fonctionnalisés à l'anhydride maléique sont présents en une quantité totale de 1 phr à 20 phr, plus particulièrement de 5 phr à 15 phr.

4. Tuyau selon une quelconque revendication précédente, dans lequel :
le ou les co-agents de réticulation de diacrylate, en particulier le ou les diacrylates métalliques, sont présents en une quantité totale de 1 phr à 15 phr, plus particulièrement de 2 phr à 10 phr.

5. Tuyau selon une quelconque revendication précédente, dans lequel :
la quantité totale du ou des co-agents de réticulation de polybutadiène fonctionnalisés à l'anhydride maléique est supérieure à la quantité totale du ou des co-agents de réticulation de diacrylate,
plus particulièrement, le rapport entre le ou les co-agents de diacrylate totaux et le ou les co-agents de réticulation de polybutadiène fonctionnalisés à l'anhydride maléique totaux se situe dans une plage de 1:20 à 15:20, plus particulièrement de 5:10 à 10:10.

6. Tuyau selon une quelconque revendication précédente, dans lequel :
la quantité totale du ou des co-agents de réticulation de polybutadiène fonctionnalisés à l'anhydride maléique est supérieure à la quantité totale du système de durcissement au peroxyde,
plus particulièrement, le rapport entre le peroxyde total et la teneur totale en co-agents combinés, y compris le ou les co-agents de diacrylate totaux et le ou les co-agents de réticulation de polybutadiène fonctionnalisés à l'anhydride maléique totaux, se situe dans une plage d'environ 1:30 à environ 10:30, plus particulièrement d'environ 5:15 à environ 10:15.

7. Tuyau selon une quelconque revendication précédente, dans lequel :
le ou les co-agents de réticulation de diacrylate et le ou les co-agents de réticulation de polybutadiène fonctionnalisés à l'anhydride maléique servent d'agents de liaison à la couche barrière PA et améliorent la liaison par rapport à une même composition dépourvue de ces agents de liaison ; plus particulièrement, dans lequel les performances de liaison sont telles que la liaison interfaciale entre la couche barrière PA et la couche élastomère est supérieure à la résistance de la couche élastomère ; plus particulièrement, ces performances de liaison sont obtenues avec la composition élastomère elle-même dépourvue de polyamide.

8. Tuyau selon une quelconque revendication précédente, dans lequel :
la composition élastomère comprend en outre une ou plusieurs résines de polybutadiène non maléatées, en particulier une ou plusieurs résines de polybutadiène liquides, pour une quantité totale d'environ 1 phr à 15 phr, plus particulièrement de 2 phr à 10 phr.

9. Tuyau selon une quelconque revendication précédente, dans lequel :
la composition élastomère comprend en outre un ou plusieurs noirs de carbone en une quantité totale de 10 phr à 80 phr, plus particulièrement de 20 phr à 60 phr.

10. Tuyau selon une quelconque revendication précédente, dans lequel :
le ou les EPDM sont présents en une quantité totale de 80 phr à 100 phr, plus particulièrement de 90 phr à 100 phr.

11. Tuyau selon une quelconque revendication précédente, dans lequel :
la composition élastomère est exempte de phénylènedimaléimide et/ou de polyamide.

12. Tuyau selon une quelconque revendication précédente, dans lequel :
la couche barrière PA comprend les PA 6, PA 66 ou leur combinaison, en particulier la couche barrière PA comprend le PA 66/6 dans lequel le PA66 est en plus grande proportion que le PA 6.

13. Tuyau selon une quelconque revendication précédente, dans lequel :
le taux de perméation du tuyau est approprié pour être utilisé comme ligne humide pour pile à combustible,
en particulier la ligne humide de pile à combustible d'un véhicule, plus particulièrement le tuyau ayant un rayon de courbure d'environ 1,5 à 5 fois le diamètre extérieur du tuyau.

14. Tuyau selon une quelconque revendication précédente,
comprenant en outre :
une couche de renforcement (108) disposée à l'extérieur de la couche élastomère (102, 106) ; et
une couche de recouvrement (110) disposée à l'extérieur de la couche de renforcement ;
plus particulièrement, dans lequel :
la couche élastomère forme un tube intérieur (102) du tuyau ;
la couche barrière PA (104) est disposée à l'extérieur du tube intérieur (102) ;
une couche d'accrochage (106) est disposée à l'extérieur de la couche barrière PA (104), la couche d'accrochage étant directement liée à la couche barrière PA sans couche adhésive intermédiaire, en particulier dans lequel la couche d'accrochage est formée à partir d'une composition comprenant : un ou plusieurs monomères d'éthylène-propylène-diène (EPDM) ; un système de durcissement au peroxyde ; un ou plusieurs co-agents de réticulation de diacrylate ; et un ou plusieurs co-agents de réticulation de polybutadiène fonctionnalisés à l'anhydride maléique ;
la couche de renforcement (108) est disposée à l'extérieur de la couche d'accrochage (106) ; et
la couche de recouvrement (110) est disposée à l'extérieur de la couche de renforcement (108).

15. Système de pile à combustible (50) comprenant :
une source de gaz hydrogène (54) ;
un empilement de pile à combustible (52) ; et
le tuyau (100, 300) selon une quelconque revendication précédente reliant fluidiquement la source de gaz hydrogène (54) à l'empilement de pile à combustible (52) ;
plus particulièrement, le système de pile à combustible comprenant une source de vapeur d'eau (70) interposée entre la source de gaz hydrogène (54) et l'empilement de pile à combustible (52), de sorte que le tuyau (100, 300) transporte un mélange de vapeur d'eau et de gaz hydrogène.
